# EUROPEAN PATENT SPECIFICATION

(11) **EP 1 148 933 B1**
(45) Date of publication and mention of the grant of the patent: **24.01.2007**
(21) Application number: 00910009.0
(22) Date of filing: 27.01.2000
(51) Int. Cl.: B01D 71/00

(54) **METHOD OF FORMING AN ALL THERMOPLASTIC, PERFLUORINATED RESIN HOLLOW FIBER MEMBRANE MODULE**
VERFAHREN ZUR HERSTELLUNG EINES GESAMTTHERMOPLASTISCHEN, PERFLUORIERTEN HARZ HOHLFASERNMEMBRAN MODULS
METHODE POUR FORMER UN MODULE A MEMBRANE EN FIBRES CREUSES TOUT RESINE THERMOPLASTIQUE PERFLUOREE

(30) Priority: 29.01.1999 US 117856 P
(43) Date of publication of application: 31.10.2001
(73) Proprietor: Entegris, Inc., Chaska, Minnesota 55318 (US)
(72) Inventor: YEN, Larry, Y., Andover, MA 01810 (US); DOH, Cha, P., Sudbury, MA 01776 (US); GATES, T., Dean, Bedford, MA 01730 (US)
(74) Representative: Gambell, Derek
(86) International application number: PCT/US2000/002193
(87) International publication number: WO 2000/044483

(56) References cited:
- EP-A- 0 175 432
- EP-A- 0 299 459
- EP-A- 0 803 281
- EP-A- 0 855 212
- US-A- 5 695 702
- DATABASE WPI Week 199303 Derwent Publications Ltd., London, GB; AN 1993-024574 XP002142276 & JP 04 354521 A ((SUME)SUMITOMO ELECTRIC CO), 8 December 1992 (1992-12-08)

## Description

The present invention relates to a method of forming a hollow fiber membrane module. More particularly, it relates to a method of making a hollow fiber module wherein the fibers and potting compound are both formed of one or more thermoplastic, perfluorinated resins.

### BACKGROUND OF THE INVENTION

A hollow fiber membrane is a tubular filament comprising an inner diameter and an outer diameter having a wall thickness between them. Typically, this wall thickness is porous. The inner diameter defines the hollow portion of the fiber and is used to carry fluid, either the feed fluid to be filtered, or the permeating fluid, when the fluid being filtered contacts the outer surface. The inner hollow portion is typically referred to as a lumen.

Hollow fiber membrane devices have been used in many applications in the pharmaceutical, food, beverage and semiconductor industries including gas separation, reverse osmosis, ultrafiltration and particle and bacteria removal with microporous membranes. In these applications, the membrane acts as a permeable barrier, allowing the passage of the carrier fluid and some dissolved or dispensed species, and retaining other selected species do to differences in species size, permeation rates, or other physical or chemical attributes. These devices have the unique feature of requiring no support structures for the membranes as a result of their tubular geometry which makes the membrane self supporting.

In practical applications, fiber is cut or otherwise made to a specific length and a number of fibers are gathered into a bundle. A portion of one or both ends of the fiber bundle are encapsulated in a material which fills the interstitial volume between the fibers and forms a tubesheet. This process is sometimes called potting the fibers and the material used to pot the fibers is called the potting material. The tubesheet acts as a seal in conjunction with a filtration device, such as a housing or cartridge. If the encapsulation process closes and seals the fiber ends, one or both ends of the fiber bundle are cut across the diameter or otherwise opened. In some cases, the open ends of the fiber bundle are deliberately closed or sealed before potting to prevent the potting material from entering the open ends of the fibers. If only one end is to be opened to permit fluid flow, the other end is left closed or is sealed. The filtration device supports the tubesheet and provides a volume for the fluid to be filtered and its concentrate, separate from the permeating fluid. In use, a fluid stream contacts one surface and separation occurs at the surface or within the depth of the fiber wall. If the fiber outer surface is contacted, the permeating fluid and species pass through the fiber wall and are collected in the lumen where it is directed to the open end or ends of the fiber. If the fiber inner surface is contacted, the fluid stream to be filtered is fed into the open end or ends and the permeating fluid and species pass through the fiber wall and are collected from the outer surface.

Most hollow fiber membrane devices are formed by potting the ends of the bundle of fibers in an adhesive such as an epoxy or urethane resins. These membranes have been found to be deficient in purity as well as in their capability for resisting aggressive or corrosive chemicals and solvents. For example, the organic solvent-based solutions used in wafer coating processes in the microelectronics industry will dissolve or swelling and weaken epoxy or urethane potting materials. Additionally, the high temperature stripping baths in this industry consist of highly acidic and oxidative materials which destroy such potting compounds.

More recently, it has been proposed to pot these membranes in a thermoplastic resin, in particular to use thermoplastics such as polyethylene or polypropylene and in some instances ultrahigh molecular weight polyethylene. See U.S. 5, 695, 702. While this is more acceptable than the previous epoxy or urethane method, it is limited in the membranes and resins which one may select for use in its method. Unlike epoxy or urethane that have relatively low viscosity and therefore flow easily around and between the fibers to be potted, thermoplastic materials are of higher molecular weight and higher viscosity and are difficult to cause to flow around and between such fibers. Moreover, even when one is able to achieve some flow, the flow is not uniform, leading to irregularities, voids and gaps in the potting. Additionally, these molten thermoplastic materials often have detrimental effects on the fibers themselves, causing fibers to collapse, shrink or melt. This has led to practitioners to adopt various complicated schemes to overcome these problems.

There exists a class of thermoplastic materials known as perfluorinated thermoplastic polymers. These materials are known by various chemical terms such as poly(TFE-co-PFAVE) resins ("PFAVE"). These materials are also commonly referred to as PFA, MFA or FEP resins. These materials have the chemical inertness similar to that of PTFE resin, but unlike PTFE resin, are thermoplastic and therefore capable of being molded and formed into various shapes easily and economically. Hollow fibers made from such perfluorinated resins have been made. Such fibers and methods for making them are disclosed in U.S. 4, 990,294 and 4,902,456.

None of the methods to date have demonstrated a capability of potting perfluorinated hollow fibers with a perfluorinated polymer potting resin. As is typical with such polymers, they inherently are difficult to have bond to themselves or other materials.

A hollow fiber membrane device formed completely of perfluorinated thermoplastic resins, including the fibers, potting resin and module components such as the end caps and cartridge housing would be highly desirable in that it would provide a completely inert system, especially at elevated temperatures which would be capable of resisting aggressive or corrosive chemicals and organic solvents, which would provide the highest level of purity available as such materials are inherently clean and tend not to have a high level of extractables and which because it is formed of thermoplastic materials could be formed relatively easily and efficiently. The present invention provides such a method and a product made by that method.

### IN THE DRAWINGS

Figure 1 shows a perspective diagram of an apparatus useful in making an array of hollow fiber membranes in accordance with one preferred embodiment of the present invention;
Figure 2 is a top view of a finished array of hollow fiber membranes made in accordance with the process of Figure 1;
Figure 3 is a schematic view of an apparatus used in the making of the hollow fiber membrane tubesheet according to a preferred embodiment of the present invention;
Figure 4 shows a detailed view, in perspective, showing the spiral winding sealing of a tubesheet according to a preferred embodiment of the present invention;
Figure 5 shows a perspective view of a device for accomplishing the post-formation heat treating step according to a preferred embodiment of the present invention;
Figure 6 shows a sectional view of a hollow fiber membrane module in a cartridge housing constructed in accordance with a preferred embodiment of the present invention.

### SUMMARY OF THE INVENTION

The essential and optionally features of the invention are set out in the accompanying main- and sub-claims respectively.

It has been found that by using a perfluorinated resin, in particular a thermoplastic perfluorinated potting resin which has a lower peak melting temperature than the membrane and a reasonably low melt viscosity, integral potting of the hollow fiber membranes can be achieved. The combination of these two characteristics of the potting resin allows for longer contact time between the molten resin and the fibers to attain more complete encapsulation and sealing of the fibers without damage to the fibers or collapse of their lumens. An assembled bundle of fibers and potting resin are heated to a temperature above the peak melting point of the potting resin and at or below the peak melting point of the fibers, in order to cause the potting resin to flow and fill any gaps or voids between the fibers which may be present. Long processing times can be used, if necessary, during this heating step to ensure adequate sealing without risk of fiber damage or lumen collapse. The resultant potted fiber bundle may then be assembled into a cartridge housing made of one or more thermoplastic perfluorinated resins, and sealed with one or more end caps also formed of one or more thermoplastic perfluorinated resins to form an integral all thermoplastic perfluorinated resin based module. Alternatively, other inert fluorinated resins may be used as the housing or end caps, such as PTFE resin, in order to create an all fluoropolymer module.

An embodiment of the present invention provides a method of forming an all thermoplastic, perfluorinated resin hollow fiber module including the steps of contacting a plurality of hollow fiber membranes made of one or more thermoplastic perfluorinated resins with a molten potting resin made of gne or more thermoplastic perfluorinated resins. In order to form a bundle, the petting resin having a peak melting point below that of the hollow fibers and which is applied to the hollow fibers at a temperature below the peak melting point of the hollow fibers, cooling the bundle, heating the bundle to a temperature at or above the softening point of the potting resin but below the peak melting point of the hollow fibers for a period of time sufficient to create a fluid-tight seal between the fibers and the potting resin.

A preferred embodiment of the present invention includes removing a portion of the potting compound in order to open the interior of the fibers to the exterior environment, inserting the bundle into a housing having a first and second end and sealing said bundle into said housing, and applying an end cap to the first and second ends of the housing in order to form an integral, all perfluorinated thermoplastic hollow fiber module.

These and other aspects of the present invention will be made clear from the following description and examples.

### DETAILED DESCRIPTION OF THE INVENTION

A method of making an all perfluorinated, thermoplastic hollow fiber module in accordance with the present convention can be accomplished through the use of one or more thermoplastic perfluorinated resins, both as the hollow fiber membrane and potting compound as well as the components of the module itself.

One aspect of the present invention is to eliminate voids and gaps In the potting material via the use of a post-potting heating treatment. This treatment allows for the potting resin to be melted such that it flows between the fibers and eliminates any gaps or voids that may exist and to allow for adequate bonding of the fibers to the potting materials.

The method of fabricating a hollow fiber membrane device according to a preferred embodiment of the present invention begins with the formation of the thermoplastic perfluorinated resin based hollow fiber membranes such as are taught in U.S. 4, 990, 294 and U.S. 4, 902, 456, and co-pending application US Patent Application 60/117,852 and 60/117,854, filed January 29,1999, the teachings of which are incorporated herein in their entireties.

The fibers are then arranged and then formed into a bundle by applying one or more streams of molten potting compound, which consists of a perfluorinated thermoplastic resin or blend of such resins, to one or more ends of the individual fibers, while such fibers after having the stream or streams applied are wound upon themselves or a mandrel to form the bundle.

The potting compound, the fibers and to extent it may be used, the mandrel, may be made of one or more thermoplastic perfluorinated resins such as poly(TFE-co-PFAVE) resins. These resins include poly(tetrafluoroethylene-co-perfluoro (alkylvinylether)) resins, often called by the term PFA or MFA or poly(tetrafluoroethylene-co-hexafluoropropylene) resin, often called FEP or blends thereof. When using a poly(tetrafluoroethylene-co-perfluoro(alkylvinylether)) resin, the alkyl group is preferably either a methyl or propyl group or blends thereof.

Such resins are commercially available. For example, one may use TEFLON® PFA resin available from E.I. duPont de Nemours of Wilmington, Delaware or HYFLON® MFA resin available from Ausimont USA of Thorofare, New Jersey or NEOFLON® PFA available from Daikin Industries of Japan.

The perfluorinated thermoplastic resin selected for the fibers should have a peak melting point that is greater than the peak melting point of the perfluorinated thermoplastic resin selected for the potting compound. This allows for adequate bonding of the fibers to the potting material without detrimental effects to the fiber caused by the temperature of the potting material.

Fibers may be made from a poly(tetrafluoroethylene-co-perfluoro(alkylvinylether) wherein the alkyl group is mainly methyl, such as HYFLON®620 resin available from Ausimont USA of Thorofare, New Jersey which has a peak melting point of about 285°C or from a poly(tetrafluoroethylene-co-hexafluoropropylene) resin, such as TEFLON®FEP 100 resin available from E.I. duPont de Nemours of Wilmington, Delaware which has a peak melting point of about 270°C.

Typically, the potting compound has a peak melting point at least 5 °C below that of the fibers. Preferably, the peak melting point of the potting compound is at least about 10°C below that of the fibers. More preferably, it has a peak melting point of at least about 25°C below that of the fibers. For example, for fibers formed of a perfluorinated thermoplastic resin such as HYFLON® 620 resin, they have a peak melting point of about 285° C. The potting compound will be a perfluorinated thermoplastic resin or blend of such resins having a peak melting point of less than about 275°C, preferably having a peak melting point of from about 230°C to about 275°C. More preferably, the potting resin has a peak melting point of less than about 260°C.

Likewise, the potting compound should have a relatively low melt viscosity. Typically, the melt flow index(MFI) (MFI as defined by A. S. T. M. D2116, at 372°C and 5kg.load) of the perfluorinated thermoplastic resin or resins used in the potting compound should be greater than 100g/10 min. Preferably the melt flow index is greater than 150 g/10 min. More preferably, the melt flow index is greater than 200g/10 min. It has been found that the higher the melt flow index, the better the resultant product. A resin or resins may be used which have a lower melt flow index than the values described above, however one will find that the process becomes more difficult and the seal between the fibers and the potting compound may become incomplete.

One example of a poly(tetrafluoroethylene-co-perfluoro(alkylvinylether) useful as a potting material is sold as HYFLON®940 AX resin from Ausimont USA Inc of Thorofare,New Jersey. It has a peak melting point of from about 250°C to 260°C and a melt flow index of about 130g/10 mins.. An example of a suitable low viscosity poly(tetrafluoroethylene-co-hexafluoropropylene) resin useful as a potting compound is taught in U.S. Patent 5, 266, 639, especially those at the lower end of melt temperatures.

The following is a description of a preferred method of making and using the present invention.

A flat substantially parallel array of these fibers is prepared. One may do so by forming a weave of fibers with the fibers either being the weft or warp and the other component being one or more fibers or threads or by forming a tape of fibers, a mat of fibers, or by any other known means for forming such an array.

Preferably, the array is formed according to the teachings of U.S. 5, 695, 702, the teachings of which are incorporated by reference herein. According to that reference, the fibers are first formed into an array by arranging individual fibers substantially parallel to each other. The fibers may be spaced apart from each other or if desired, they may be touching each other. Which arrangement is selected depends upon the packing density desired in the final module. Typically, one wishes to have a packing density of between 40 and 70%, more preferably between 45 and 65%. Packing density is defined as the ratio, expressed as a percentage, of the total cross-sectional area of all the fibers in a bundle to the cross-sectional area of the final potted fiber bundle. If the packing density is too low, then filtration efficiency is compromised. If the density is too high, then there is the danger that incomplete potting will occur or that filtration efficiency will be compromised as the fluid will have difficulty reaching the inner fibers of the bundle.

In order to reduce contamination of the fibers or the finished module, any means used to make the array should be confined to areas that will normally be trimmed from the finished hollow fiber module.

The array may be fabricated by either winding the length of the array upon itself or upon a mandrel. The mandrel, if chosen, is preferably circular in cross section, however other cross sections, such as oval, square, rectangular or polygonal may also be used. The circumference of the mandrel is chosen to be an integer multiple of the desired length of the hollow fiber member elements which form the finished array. When using the mandrel, it is preferably driven by a mechanical device such as a controller capable of controlling both rotational speed and tension applied to the array. The wound hollow fiber membrane array is arranged such that it is fed as a single layer of fibers, with the windings being substantially parallel to each other either in contiguous contact with or spaced uniformity apart from one another.

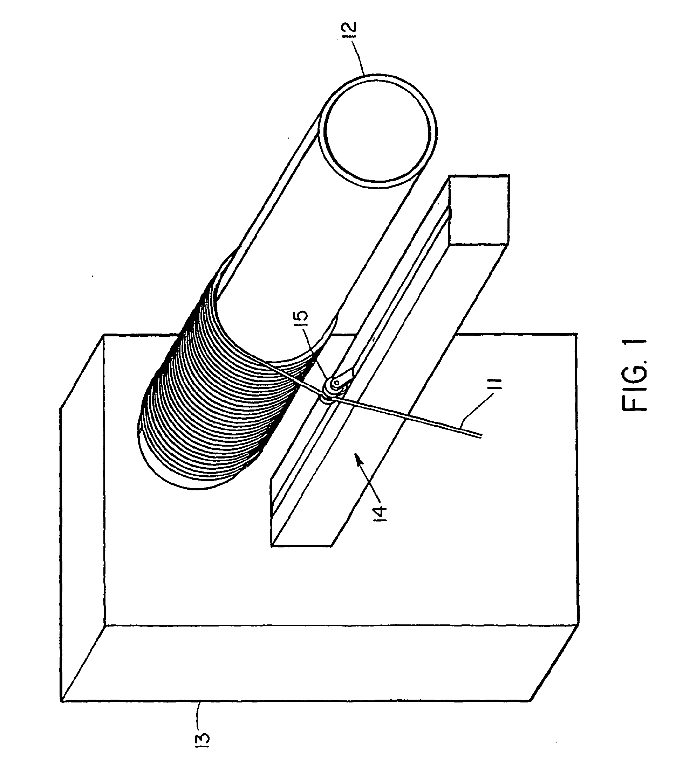

The array is fabricated by winding a continuous length of hollow fiber membrane 11 on a rotating mandrel 12 having a circular cross section as shown in Figure 1. The circumference of the mandrel is chosen to be an integer multiple of the desired length of the hollow fiber membrane elements which are to comprise the finished array. The mandrel is driven by a controller 13 capable of controlling both the rotational speed of the mandrel and the tension applied to the hollow fiber membrane. The controller includes a fiber feed mechanism 14 which moves a pulley 15 parallel to the central axis of the mandrel and guides the hollow fiber membrane as it is being wound to control the spacing between adjacent fiber segments. The wound hollow fiber membrane is arranged in a single layer, with the windings being substantially parallel to one another either in contiguous contact with, or spaced uniformly apart from, one another.

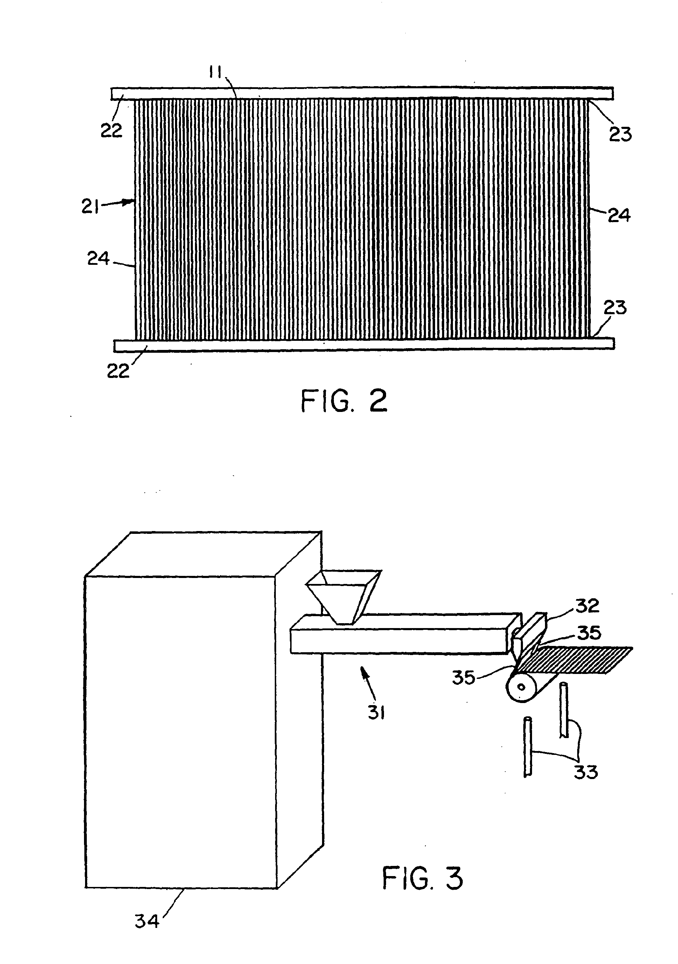

When the appropriate length of hollow fiber membrane 11 is accumulated on the mandrel 12, the controller 13 stops the winding operation and one or more strips of an adhesive tape 22 (Figure 2) are applied to the outer surface of the hollow fiber membrane segments positioned along the length of the mandrel in an orientation parallel to its axis of rotation and perpendicular to the central axes of the individual hollow fiber segments. More than one strip of tape can be used, the circumferential spacing between strips being equal to the desired axial length of the membrane fibers in the array 21. The tape extends from the first hollow fiber membrane segment wound on the mandrel to the least and preferably extends about 1 cm. beyond each end of the fiber array.

A cutting guide (not shown) may be used to slit the hollow fiber membrane segments along the middle of the entire length of the tape 22 such that the hollow fiber membranes 11 remain joined together by the now halved strip of tape. In this manner, one or more hollow fiber membrane arrays 21 are produced, with the fiber elements being secured to one another at their ends by the tape thereby making it easily removed from the mandrel 12. It should be noted that, in this discussion, the edges 23 of the rectangular hollow fiber membrane array 21 are defined as the two surfaces formed by the end portions of the individual hollow fiber membrane elements comprising the array; the ends 24 of the array are defined by the outermost surfaces of the first and last hollow fiber membrane elements in the array. Figure 2 shows in the plan view an array formed in accordance with the above procedures. In cases where one fiber array does not contain a sufficient number of hollow fibers to fabricate a hollow fiber membrane module of the desired membrane area, the arrays may be spliced together end-to-end by means of an adhesive or other bonding mechanism to form a larger array. Any number of arrays may be so spliced together in the manner described above to form a larger array having tape extensions at the edges of both ends of the array.

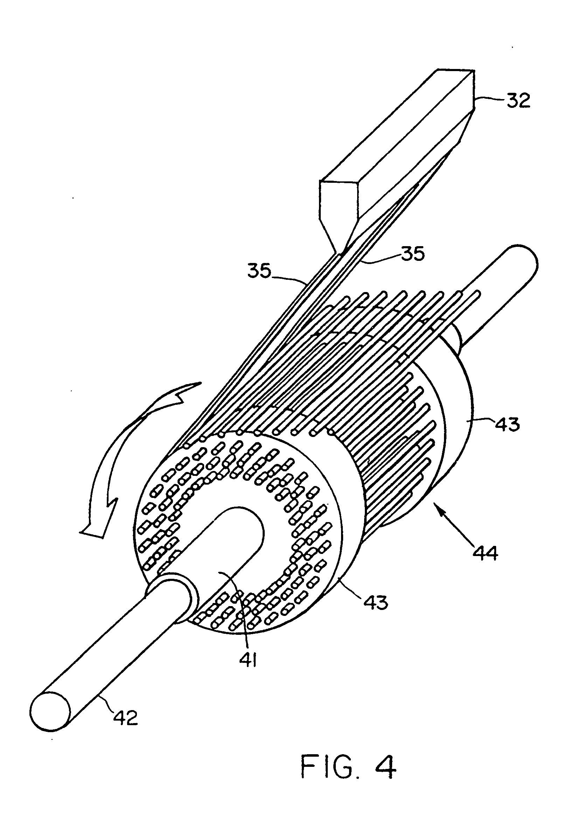

The next operation in the fabrication of a hollow fiber membrane module is the winding of the fiber array into a bundle and the corresponding formation of a pair of tubesheets 43 at one or more of the edges 23 of the array 21. This process is shown schematically in Figures. 3 and 4. An extruder, preferably a single screw extruder, 31 is used to feed a thermoplastic sealing polymer to a dual slot extrusion die 32 which produces two polymer extrusions 35 in the form of a stream. A suitable length of thermoplastic tube 41 is mounted on a removable winding mandrel 42 positioned below the extrusion die, with the rotational axis of the mandrel being parallel to a line connecting the two outlets of the extrusion die. Stepper motors (not shown) are used to adjust the speed of rotation and distance between the mandrel and the die. A set of gas heaters 33 mounted on a retractable slide (not shown) is used to preheat the tube 41 prior to the fabrication of the tubesheets. The functions of the various elements described above are regulated by a programmable, microprocessor-based controller 34.

In order to maintain the molten thermoplastic polymer extrusion 35 from the die at a uniform temperature, it is preferred to operate the extruder 31 at a constant speed. Maintaining a uniform fiber spacing and tubesheet width requires that the fiber feed rate remain constant and that the distance between the extrusion die and contact point of the polymer extrusion and tubesheet 43 remain constant. The previously described controller 34 in conjunction with the apparatus discussed above accomplish this result with feed-back control mechanisms known to those skilled in the art.

Before the winding of the array 21 and the formation of the tubesheets 43, the tube 41 must be pre-heated using the heaters 33. This step is necessary to obtain a good bond between the tubesheet and the tube. Rotation of the winding mandrel 42 and the tube is begun and the gas heaters are activated such that a hot gas stream impinges on the portions of the tube where the tubesheets will be formed. After a suitable time, the heaters are removed and the polymer extrusions 35 are applied to the tube.

Following the accumulation of approximately a one-half turn of the polymer extrusions 35 on the tube 41, the leading edge of the hollow fiber membrane array 21 is positioned under and parallel to the tube with the adhesive side of the extended strip of tape 22 facing the tube. The tape is then brought into contact with the tube outboard of the tubesheets 43 and allowed to wind up on the tube as the rotational speed and position of the winding mandrel 42 and tube are adjusted by the process controller 34. A slight tension is maintained on the hollow fiber array to keep the fibers in contact with the polymer extrusions. As the trailing edge of the array is wound up, the tape extensions are fastened to the previous fiber layer to form a fiber bundle 44. Application of the polymer extrusions may be terminated after the entire array is wound about the mandrel. Alternatively, the tubesheets may be built up to a larger diameter depending on the requirements of the rest of the module assembly process. In this case, the rotation of the winding mandrel continues as the tubesheets are allowed to cool.

After formation and cooling of the hollow fiber bundle, a post-formation heating step is performed. In this step, the potted ends are heated to a temperature below the peak melting point of the hollow fiber membranes. The temperature selected is above the peak melting point of the potting resin, but below the peak melting point of the hollow fiber membranes. For example, the heating temperature may range from 250°C to 300°C. An alternative means for describing this temperature is that it should be at least 10°C below the peak melting point of the fibers, preferably at least 15°C and more preferably, at least 25°C below the peak melting point of the fibers. This step causes the potting material to melt, and flow between the fibers in order to eliminate any voids or gaps which may exist. One advantage to using the post-formation heating step is that the criticality of the initial extrusion step is not as important as the post-formation heating step allows for the elimination of any voids formed during the extrusion step. This is of particular interest and importance in that the extrusion step often is very slow and laborious.

The time required for the post-formation heating step will vary widely depending upon such factors as the peak melting point of the potting compound and the fibers, the viscosity/melt flow index of the potting compound, the perceived level of voids or gaps which must be eliminated, etc.. Typically, the process requires from about 1 hour to about 24 hours. It has been found that the longer one is able to perform the heating step, without damage to the fibers, the better the result. Preferably, the heating step occurs from about 3 to about 12 hours, more preferably from about 5 to about 8 hours.

Preferably, the heating step occurs with the tubesheet in a vertical orientation with one end being treated at a time. Further, the end or ends may be treated in a horizontal orientation provided that little or no slumping occurs. This is particularly possible with higher viscosity or lower melt flow index potting compounds. Preferably, the heat treatment occurs prior to the formation of the filtration cartridge. Alternatively, the heat treatment may occur after the tubesheet has been inserted into the housing or end caps. In this embodiment, the heat treatment acts both as a mechanism for removing any gaps or voids and as the sealing mechanism for attaching the bundle to the housing or end caps. Additionally, while it is preferred that the heating step occur before the lumens of the fibers are opened, one can perform the step after the lumens have been opened provided that some means is used to maintain the opened ends of the lumens.

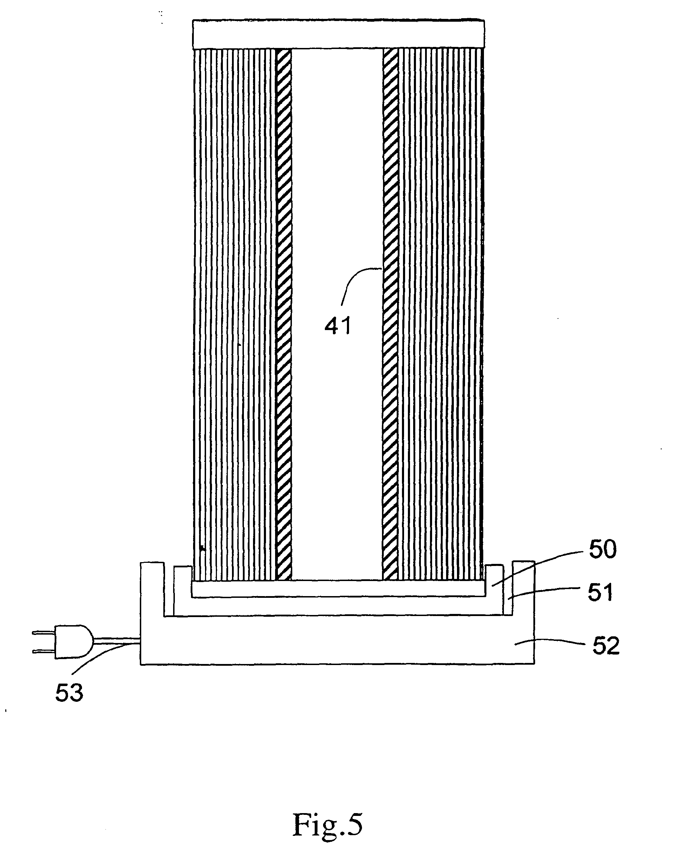

Figure 5 shows a preferred embodiment of the post-formation heat treatment. As shown, one end 43A of the tubesheet 43 is placed into a cup-like holder 50 which has a depth and diameter about the same as the potted end 43A. The holder 50 is mounted into a recess 51 formed in a metal heating block 52. The block 52 is heated with one or more electrical heating bands 53. The holder 50 is preferably made of a thermally conductive material, such as metal or ceramics may also be used.

Alternatively, one may use other means of providing the heat treatment. For example, one may use an oven including but limited to radiant, convection or microwave ovens in lieu of the holder/block arrangement above. The use of a holder or holders in an oven or other heating means may be desirable. The holders contain the area into which the potting material may flow. This concentrates the flow to the areas between the fibers. Additionally, one may use two holders at the same time in order to treat both ends of the tubesheet simultaneously whether the heating is via a heating block arrangement, an oven or other well known means in the art.

Either one or both of the end portions of the sealed fiber bundle can be trimmed to expose the fiber lumens and further machining may be performed to provide a means for sealing the fiber bundle into a suitable housing or the fiber bundle may be contoured to provide details suitable for thermoplastically bonding it to the components of a pressure housing of the same or similar resin material in order to produce a hollow fiber module.

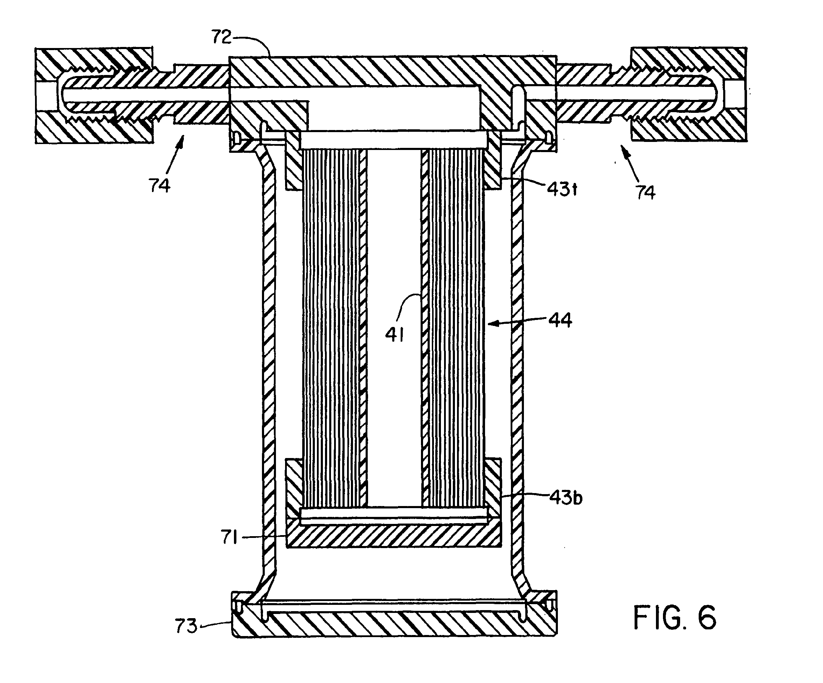

Figure 6 shows the details of the fiber bundle 44 and corresponding tubesheets 43 (labeled in this figure as 43b and 43t to represent the bottom and top orientations shown in the drawing) after the postheating step which have been assembled into a hollow fiber module. Preferably, this module is formed of the same resin as either the hollow fibers or the potting material in order to create an all perfluorinated resin device. Preferably, this can be accomplished by employing conventional methods of fusion bonding of plastic components. Alternatively, the housing may be made of a similar and compatible resin such as PTFE. However, when using such a resin, especially PTFE where the resin is not thermoplastic, other means of sealing the tubesheet to be housing, such as O-rings or mechanical seals, must be used. After fabrication of the bundle 44 is completed, the bottom tubesheet 43b is bonded to an inside cap 71. During use, the filtrate collected at that tubesheet is directed to a top end cap 72 through the tube 41. The housing shell and the top tubesheet 43t of the bundle are simultaneously bonded to the top end-cap. Finally, an outside end-cap 73 is bonded to the bottom of a housing shell 74. Suitable connectors are also added to provide means of connecting the module to a feed and to an effluent line. By these means an integral, module free of O-ring seals can be produced.

Although the embodiments heretofore described have involved the formation of an array of hollow fiber membrane elements prior to sealing with a molten thermoplastic, the principles of the present invention are equally applicable to the formation of an array one fiber at a time. In this instance, a mechanical "pick-and-place" mechanism would be employed to a single fiber to a location beneath an extruder such that the polymer extrusion simultaneously creates a seal and forms the array by repeating this process until an array of desired size is created.

Various other configurations of pre-constructed fiber arrays are also possible. For example, the fibers do not have to be positioned perpendicularly to the longitudinally axis of the array. Fiber array bundle arrangements may also vary in that single-ended tubesheets for short length membrane modules may be fabricated as well as multiple tubesheets. In the former case, the hollow fiber elements must be sealed at the opposite end of the tubesheet. In the latter case, intermediate tubesheets, used primarily as support members, may or may not form integral seals around the hollow fiber membranes for particularly long modules. Furthermore, multiple bundles may be produced simultaneously using integrally sealed, multiple tubesheets which are subsequently cut to form individual fiber bundles. Still further, planar laminated arrays are also contemplated to be within the purview of this invention, in which case rectangular fiber arrays may be mounted on top of one another. The use of woven arrays is also possible.

An alternative method of making a product according to this invention is to form a mat or flat array of fibers using the thermoplastic, perfluorinated resin as the tape binder for the array and then rolling the array into a cylindrical or other desired shape and subjecting the ends to the post-formation heating step to form an integral, sealed tubesheet. For example, a mat of fibers in the form of an array would have a stream of potting material extruded along two of its portions of its length, preferably in parallel and spaced apart from each other at a desired distance equal to that of the finished tubesheet. Further, one can adhere or secure individual fibers to two parallel strips of thermoplastic, perfluorinated resin.

With regard to the manufacture of a finished module, other means for sealing the bundle to the module may be employed, as for example, with the use of O-rings (preferably formed of a perfluorinated resin such as thermoplastic perfluorinated resin or PTFE resin,).

Additional modifications will become apparent to those of skill in the art without departing from the scope of the present invention as defined in the accompanying claims.

### Example 1

Microporous thermoplastic perfluorinated hollow fiber membranes made from Ausimont's MFA 620 resin according to the teachings of US Patents 4, 990, 294 and 4, 902, 456 were used for potting in this example. The peak melting temperature of the fibers as measured by differential scanning calorimetry (DSC) was 289°C. The outside diameter of each fiber was 1000 microns and the inside diameter was 600 microns. Porosity was approximately 65%. The potting resin used was a thermoplastic perfluorinated resin available from Ausimont as MFA19405/13 resin. The peak melting temperature of this resin was 258°C and its melt flow rate (MFI at 5kg, 372°C as described by ASTM D 2116) was 124g/10 minutes.

Approximately 90 strands of the above fibers, each being about 15 cm in length, were arranged in a parallel array and taped together near both ends of the fiber to form a fiber mat. A method similar to that described in U.S. 5, 695, 702 was used to extrude two molten streams of the potting resin described above in a perpendicular direction onto the mat. The streams were spaced about 9 cm apart and were each about 2.5 cm in width having a thickness of about 0.075 cm. The stream die temperature was set at 335°C. The mat/molten resin streams combination was spirally wound on a poly(tetrafluoroethylene-co-hexafluoropropylene) tube into a cylindrical shaped bundle with a pair of potted ends. It was observed that the molten potting resin also bonded to the FEP tube.

After the potted ends were cooled, the bundle was removed and inspected. One could visually observe a number of voids and bubbles in the potting surrounding the fibers. Adhesion strength was excellent. The fibers could not be pulled out of the potting compound.

Following inspection, excess fibers and tubing beyond the potted ends were trimmed off to be readied for post-extrusion heat treatment. One of the ends was then placed in a cylindrical cup-shaped metal holder with depth and diameter approximately the same dimensions as the potted end. The holder with the potted end was then fitted into a cut-out in a metal heating block. The block was heated with electrical heating bands and its temperature was controlled at 280°C. The sample was heated for about one hour at that temperature. This procedure was repeated for the opposite end of the bundle. After completion of the post-extrusion heat treatment, the ends were machined to until the lumens of the fibers were exposed. The fibers were observed to be bonded together on their shell side by the potting resin and no visible voids were observed. Adhesion strength was the same as before the heating treatment.

The potted sample was tested for potting integrity by placing and sealing both ends via O-rings inside a clear plastic housing. Iso-propyl-alcohol (IPA) was used to wet the fibers and fill the inside of the housing, making sure that all of the potted areas were covered with IPA. Both ends of the housing were capped with one of the caps having an inlet for pressurized air. Air pressure was slowly introduced and increased via the inlet on the one end. Simultaneously, the inside of the holder was examined visually for air bubbles originated from the potting area. No bubbles were observed at either end up to at least 15 psi, indicating integral potting had been achieved.

## Claims

1. A method of forming an all thermoplastic, perfluorinated resin hollow fiber membrane module comprising the steps of:
contacting a plurality of hollow fiber membranes made from one or more thermoplastic, perfluorinated resins with one or more molten thermoplastic, perfluorinated potting resins to form a parallel array of said membranes;
heating said one or more potting resins to a temperature sufficiently above their peak melting point, but at or below the peak melting point of the membranes, such that they are applied to said membranes at a contact temperature which causes said one or more potting resins to flow around said hollow fiber membranes to form a bundle of hollow fiber membranes;
cooling said bundle; and
heating said bundle to a temperature below the peak melting point of the hollow fibers and at or above the peak melting point of the one or more potting resins, for a period sufficient to form a fluid-tight seal between the one or more potting resins and the hollow fiber membranes.

2. The method of claim 1 wherein the peak melting point of the one or more potting resins is at least 5°C below that of the hollow fiber membranes, such as at least 10°C below the peak melting point of the hollow fiber membranes.

3. The method of claim 1 wherein the one or more thermoplastic, perfluorinated resins of the hollow fiber membranes and the potting resins are selected from the group consisting of homopolymers, copolymers, blends of one or more homopolymers, blends of one or more copolymers and blends of one or more homopolymers and copolymers of perfluorinated resins, such as the group consisting of poly (TFEco-PFAVE) resins and blends thereof.

4. The method of claim 1 wherein the bundle is heated to a temperature above the peak melting point of the one or more potting resins.

5. The method of claim 1 wherein the plurality of hollow fiber membranes is formed prior to contacting said membranes with said potting resins by forming said membranes together in a contiguous relation, or by forming said membranes together in a spaced apart relation.

6. The method of claim 1 wherein the potting resin is a thin stream deposited in a defined zone near one end of said membrane array, and optionally the method further comprises the step of contacting a second thin stream of potting resin near an opposite end of said array of membranes.

7. The method of claim 1 further comprising the steps of forming a parallel array of said membranes and subsequently spirally winding said array about an axis which is parallel to a longitudinal axis of said membrane array while simultaneously applying said potting resin to the array of membranes to form circular bundle of fibers having at least one potted end, and optionally the step of continuing to apply said potting resin after said circular bundle is formed to create a tube sheet of predetermined diameter about at least one end of said hollow fiber membranes.

8. The method of claim 1 further comprising the step of cutting the at least one potted end of the bundle orthogonally to the longitudinal axis of said hollow fiber membranes to form said bundle with at least one flat end surface having exposed lumens, and optionally the step of mounting said bundle into a cartridge housing, e.g., by fusion bonding.

9. The method of claim 1, further including the steps of:
a. forming a plurality of hollow fiber membranes formed of one or more thermoplastic perfluorinated resins into a parallel arrangement wherein the fibers are arranged in parallel arrangement along a length of the fibers; then
b. winding the plurality of hollow fibers about an axis which is parallel to the length of the hollow fiber membranes so as to form a bundle having two bundle ends;
c. simultaneously with step (b), extruding a molten stream of a perfluorinated thermoplastic resin having a peak melting point at least 5°C below the peak melting point of the hollow fiber membranes and having a melt flow index of 100 g/10 mins. or greater and directing said resin onto at least one of the two bundle ends to thereby pot at least one end in said resin;
d. cooling the bundle;
e. heating the bundle at every potted end to a temperature at or above the peak melting point of the resin of the stream but below the peak melting point of the hollow fibers; and
f. exposing the lumen ends of the hollow fiber membranes at every potted end to communicate with the exterior of the bundle.

10. The method of claim 9 wherein both ends of the bundle are potted with the molten stream of the perfluorinated thermoplastic resin, and optionally both ends of the bundle are exposed so that the lumen ends of the hollow fiber membranes can communicate with the exterior of the bundle.

11. The method of claim 9 further including the steps of:
g. inserting the bundle into a housing for the bundle having a first and second end and a cylindrical housing interior being suitably shaped to contain the membrane bundle, a first means for sealing the first end of the bundle to the interior of the housing adjacent its first end, a second means for sealing the second end of the bundle to the interior of the housing adjacent its second end, the housing having one or more means for dividing the bundle into at least two regions including a shell side space exterior to the portion of the bundle between the potted ends and a space including the lumens; then
h. applying a first end cap adjacent the first end of the housing to seal the first housing end; then
i. applying a second end cap adjacent the second housing end so as to seal the second housing end; and
j. providing a shell side access in the housing and at least one access in at least one of the first or second end caps.

12. A method according to claim 9 wherein the potting compound has melt flow index in the range of from 100 to 200 g/10 mins.

## Patentansprüche

1. Verfahren zur Herstellung eines gesamtthermoplastischen, perfluorierten Harzhohlfasermembranmoduls, welches die Schritte umfasst, dass man:
eine Mehrzahl von Hohlfasermembranen, die aus einem oder mehreren thermoplastischen, perfluorierten Harzen gefertigt sind, mit einem oder mehreren geschmolzenen thermoplastischen, perfluorierten Einbettharzen zur Formung einer parallelen Anordnung der Membranen in Berührung bringt;
das eine oder mehrere Einbettharze auf eine Temperatur erhitzt, die ausreichend oberhalb deren höchster Schmelztemperatur ist, aber bei oder unterhalb der höchsten Schmelztemperatur der Membranen, so dass diese auf die Membranen bei einer Kontakttemperatur angewendet werden, welche das eine oder die mehreren Einbettharze dazu bringt, um die Hohlfasermembranen zur Formung eines Bündels von Hohlfasermembranen herum zu fließen;
das Bündel kühlt; und
das Bündel auf eine Temperatur unterhalb der höchsten Schmelztemperatur der Hohlfasermembranen und bei oder oberhalb der höchsten Schmelztemperatur des einen oder der mehreren Einbettharze erhitzt, für eine Zeitspanne, die ausreicht, eine flüssigkeitsdichte Abdichtung zwischen dem einen oder den mehreren Einbettharzen und den Hohlfasermembranen auszubilden.

2. Verfahren nach Anspruch 1, wobei der höchste Schmelzpunkt des einen oder der mehreren Einbettharze wenigstens 5°C unterhalb desjenigen der Hohlfasermembranen liegt wie beispielsweise wenigstens 10°C unterhalb des höchsten Schmelzpunktes der Hohlfasermembranen.

3. Verfahren nach Anspruch 1, wobei das eine oder die mehreren thermoplastischen perfluorierten Harze der Hohlfasermembranen und die Einbettharze ausgewählt sind aus der Gruppe bestehend aus Homopolymeren, Copolymeren, Mischungen von einem oder mehreren Homopolymeren, Mischungen von einem oder mehreren Copolymeren und Mischungen von einem oder mehreren Homopolymeren und Copolymeren von perfluorierten Harzen, wie beispielsweise die Gruppe bestehend aus Poly(TFEco-PFAVE)-Harzen und Mischungen davon.

4. Verfahren nach Anspruch 1, wobei das Bündel auf eine Temperatur oberhalb des Spitzenschmelzpunktes des einen oder der mehreren Einbettharze erhitzt wird.

5. Verfahren nach Anspruch 1, wobei die Mehrzahl von Hohlfasermembranen gebildet wird bevor man die Membranen mit den Einbettharzen in Berührung bringt, indem man die Membranen zusammen in einer benachbarten Beziehung formt oder indem man die Membranen zusammen in einer beabstandeten Beziehung formt.

6. Verfahren nach Anspruch 1, wobei das Einbettharz ein dünner Strom ist, der in einer definierten Zone nahe einem Ende der Membrananordnung angeordnet ist und gegebenenfalls das Verfahren weiterhin den Schritt umfasst, dass man einen zweiten dünnen Strom von Einbettharz nahe an einem entgegengesetzten Ende der Anordnung der Membranen in Berührung bringt.

7. Verfahren nach Anspruch 1 weiterhin aufweisend die Schritte, dass man eine parallele Anordnung der Membranen formt und anschließend die Anordnung spiralig um eine Achse windet, die parallel zur Longitudinalachse der Membrananordnung ist, während man zugleich das Einbettharz auf die Membrananordnung zur Formung eines kreisförmigen Bündels von Fasern anwendet, die wenigstens ein eingebettetes Ende haben und gegebenenfalls den Schritt, dass man mit der Anwendung des Einbettharzes fortfährt, nachdem das kreisförmige Bündel gebildet wurde, um eine Rohrplatte von vorbestimmtem Durchmesser um wenigstens ein Ende der Hohlfasermembranen zu schaffen.

8. Verfahren nach Anspruch 1 weiterhin aufweisend den Schritt, dass man das wenigstens eine eingebettete Ende des Bündels orthogonal zu der Longitudinalachse der Hohlfasermembranen schneidet zur Formung des Bündels mit wenigstens einer flachen Endfläche, die offene Lumen aufweist, und gegebenenfalls den Schritt, dass man das Bündel in ein Kartuschengehäuse montiert, beispielsweise durch Verbindung durch Schmelzverbinden.

9. Verfahren nach Anspruch 1 weiterhin einschließend die Schritte, dass man:
a. eine Mehrzahl von Hohlfasermembranen, die aus einem oder mehreren thermoplastischen perfluorierten Harzen geformt sind, in eine parallele Anordnung formt, wobei die Fasern in paralleler Anordnung entlang der Länge der Fasern angeordnet sind; dann
b. die Mehrzahl von Hohlfasern um eine Achse wickelt, die parallel zur Länge der Hohlfasermembranen ist, um so ein Bündel zu formen, das zwei Bündelenden hat;
c. zugleich mit Schritt (b) einen geschmolzenen Strom eines perfluorierten thermoplastischen Harzes extrudiert, das einen höchsten Schmelzpunkt von wenigstens 5°C unterhalb des höchsten Schmelzpunktes der Hohlfasermembranen hat und das einen Schmelzflussindex von 100 g/10 min oder größer hat, und das Harz auf wenigstens eine der beiden Bündelenden richtet, um dadurch wenigstens ein Ende in dem Harz einzubetten;
d. das Bündel kühlt;
e. das Bündel an jedem eingebetteten Ende auf eine Temperatur auf oder oberhalb des höchsten Schmelzpunktes des Harzes des Stroms, aber unterhalb des höchsten Schmelzpunktes der Hohlfasern erhitzt; und
f. die Lumenenden der Hohlfasermembranen an jedem eingebetteten Ende zur Kommunikation mit dem Äußeren des Bündels öffnet.

10. Verfahren nach Anspruch 9, bei welchem beide Enden des Bündels in dem geschmolzenen Strom des perfluorierten thermoplastischen Harzes eingebettet sind und gegebenenfalls beide Enden des Bündels geöffnet werden, so dass die Lumenenden der Hohlfasermembran mit dem Außeren des Bündels kommunizieren können.

11. Verfahren nach Anspruch 9 weiterhin einschließend die Schritte, dass man:
g. das Bündel in ein Gehäuse für das Bündel einsetzt, das ein erstes und zweites Ende hat und ein zylindrisches Gehäuseinneres, das geeignet geformt ist zur Aufnahme des Membranbündels, ein erstes Mittel zur Abdichtung des ersten Endes des Bündels gegen das Innere des Gehäuses gegenüber liegend seines ersten Endes, ein zweites Mittel zur Abdichtung des zweiten Endes des Bündels gegen das Innere des Gehäuses benachbart seines zweiten Endes, wobei das Gehäuse ein oder mehrere Mittel hat zur Unterteilung des Bündels in wenigstens zwei Regionen einschließlich eines hüllenseitigen Raumes außerhalb des Abschnittes des Bündels zwischen den eingebetteten Enden und eines Raumes einschließend die Lumen; dann
h. einen ersten Endverschluss anbringt benachbart dem ersten Ende des Gehäuses, um das erste Gehäuseende abzudichten; dann
i. einen zweiten Endverschluss anbringt benachbart dem zweiten Gehäuseende, um so das zweite Gehäuseende abzudichten; und
j. einen hüllenseitigen Zugang in dem Gehäuse schafft und wenigstens einen Zugang in wenigstens einem der ersten oder zweiten Endverschlüsse.

12. Verfahren nach Anspruch 9, wobei die Einbettverbindung einen Schmelzflussindex im Bereich von 100 bis 200 g/10 min hat.

## Revendications

1. Procédé de fabrication d'un module de membranes faites de fibres creuses entièrement en résines perfluorées thermoplastiques, comprenant les étapes suivantes :
- mettre plusieurs membranes faites de fibres creuses se composant d'une ou de plusieurs résines thermoplastiques perfluorées en contact avec une ou plusieurs résines d'empotage thermoplastiques perfluorées fondues de manière à former un réseau parallèle desdites membranes ;
- chauffer lesdites une ou plusieurs résines d'empotage à une température suffisamment au-dessus de leur point de fusion maximal mais au niveau ou en dessous du point de fusion maximal des membranes de sorte qu'elles s'appliquent aux dites membranes à une température de contact qui fait que lesdites une ou plusieurs résines d'empotage s'écoulent autour desdites membranes faites de fibres creuses de manière à former un faisceau de membranes faites de fibres creuses;
- faire refroidir ledit faisceau ; et
- chauffer ledit faisceau à une température inférieure au point de fusion maximal des fibres creuses et supérieure ou égale au point de fusion maximal desdites une ou plusieurs résines d'empotage, ceci pendant une période suffisante pour former un joint étanche aux fluides entre lesdites une ou plusieurs résines d'empotage et les membranes faites de fibres creuses.

2. Procédé selon la revendication 1, dans lequel le point de fusion maximal de la résine ou des résines d'empotage est d'au moins 5° C inférieur à celui des membranes faites de fibres creuses, par exemple d'au moins 10° C inférieur au point de fusion maximal des membranes faites de fibres creuses.

3. Procédé selon la revendication 1, dans lequel lesdites une ou plusieurs résines des membranes faites de fibres creuses et résines d'empotage thermoplastiques perfluorées sont choisies dans le groupe comprenant des homopolymères, des copolymères, des mélanges d'un ou de plusieurs homopolymères, des mélanges d'un ou de plusieurs copolymères, et des mélanges d'un ou de plusieurs homopolymères et copolymères des résines perfluorées, comme le groupe comprenant des résines de poly(TFEco-PFAVE) et des mélanges de ces dernières.

4. Procédé selon la revendication 1, dans lequel le faisceau est chauffé à une température supérieure au point de fusion maximal de la résine ou des résines d'empotage.

5. Procédé selon la revendication 1, dans lequel lesdites plusieurs membranes faites de fibres creuses sont formées avant de mettre lesdites membranes en contact avec lesdites résines d'empotage en formant lesdites membranes en même temps selon une relation contiguë, ou en formant lesdites membranes en même temps selon une relation espacée.

6. Procédé selon la revendication 1, dans lequel la résine d'empotage consiste en un flux fin déposé dans une zone définie à proximité d'une extrémité dudit réseau de membranes, le procédé comprenant éventuellement une étape consistant à mettre en contact un second flux fin de résine d'empotage à proximité de l'extrémité opposée dudit réseau de membranes.

7. Procédé selon la revendication 1, comprenant en outre des étapes consistant à former un réseau parallèle desdites membranes puis à enrouler en spirale ledit réseau autour d'un axe qui est parallèle à l'axe longitudinal dudit réseau de membrane tout en appliquant simultanément ladite résine d'empotage au réseau de membranes de manière à former un faisceau circulaire de fibres ayant au moins une extrémité empotée, et comprenant éventuellement une étape consistant à poursuivre l'application de ladite résine d'empotage après que ledit faisceau circulaire soit formé de manière à créer une feuille tubulaire d'un diamètre prédéterminé autour d'au moins une extrémité desdites membranes faites de fibres creuses.

8. Procédé selon la revendication 1, comprenant en outre une étape consistant à couper ladite au moins une extrémité empotée du faisceau de manière orthogonale par rapport à l'axe longitudinal desdites membranes faites de fibres creuses de manière à former ledit faisceau avec au moins une surface d'extrémité plane comportant des lumières exposées, et comportant éventuellement l'étape consistant à monter ledit faisceau dans un boîtier de cartouche, par exemple par collage par fusion.

9. Procédé selon la revendication 1, comprenant en outre les étapes consistant à :
a) mettre en forme plusieurs membranes faites de fibres creuses formées d'une ou de plusieurs résines thermoplastiques perfluorées, selon un agencement parallèle dans lequel les fibres sont disposées selon un agencement parallèle le long de la longueur des fibres ; ensuite
b) enrouler lesdites plusieurs fibres creuses autour d'un axe qui est parallèle à la longueur des membranes faites de fibres creuses de manière à former un faisceau possédant deux extrémités de faisceau ;
c) en même temps que l'étape b), extruder un écoulement fondu d'une résine thermoplastique perfluorée ayant un point de fusion maximal inférieur d'au moins 5° C au point de fusion maximal des membranes faites de fibres creuses et ayant un indice d'écoulement à l'état fondu de 100 g/10 min. ou plus, puis diriger ladite résine sur au moins une des deux extrémités de faisceau afin d'empoter au moins une extrémité dans ladite résine;
d) faire refroidir le faisceau ;
e) faire chauffer le faisceau au niveau de chaque extrémité empotée à une température supérieure ou égale au point de fusion maximal de la résine de l'écoulement mais inférieure au point de fusion maximal des fibres creuses ; et
f) exposer les extrémités des lumières des membranes faites de fibres creuses au niveau de chaque extrémité empotée de manière à communiquer avec l'extérieur du faisceau.

10. Procédé selon la revendication 9, dans lequel les deux extrémités du faisceau sont empotées par l'écoulement fondu de résine thermoplastique perfluorée, et éventuellement les deux extrémités du faisceau sont exposées de sorte que les extrémités des lumières des membranes faites de fibres creuses puissent communiquer avec l'extérieur du faisceau.

11. Procédé selon la revendication 9, comprenant en outre les étapes consistant à :
g) insérer le faisceau dans un boîtier pour le faisceau possédant une première extrémité et une seconde extrémité et un intérieur de boîtier cylindrique de forme appropriée pour contenir le faisceau de membranes, un premier moyen pour sceller la première extrémité du faisceau à l'intérieur du boîtier à proximité de sa première extrémité, un second moyen pour sceller la seconde extrémité du faisceau à l'intérieur du boîtier à proximité de sa seconde extrémité, le boîtier comprenant un ou plusieurs moyens permettant de diviser le faisceau en au moins deux régions comprenant un espace côté enveloppe extérieur à la partie du faisceau située entre les extrémités empotées, et un espace comportant les lumières ; ensuite
h) appliquer un premier capuchon d'extrémité à proximité la première extrémité du boîtier afin de sceller la première extrémité du boîtier ; ensuite
i) appliquer un second capuchon d'extrémité à proximité la seconde extrémité du boîtier afin de sceller la seconde extrémité du boîtier ; et
j) fournir un accès côté enveloppe dans le boîtier et au moins un accès dans l'un au moins des premier et second capuchons d'extrémité.

12. Procédé selon la revendication 9, dans lequel le composé d'empotage possède un indice d'écoulement à l'état fondu se situant dans une plage de 100 à 200 g/10 mins.
